# EUROPÄISCHE PATENTSCHRIFT

(11) **EP 1 325 247 B1**
(45) Veröffentlichungstag und Bekanntmachung des Hinweises auf die Patenterteilung: **28.04.2004**
(21) Anmeldenummer: 01956574.6
(22) Anmeldetag: 28.07.2001
(51) Int. Cl.: F16H 45/02

(54) **HYDRODYNAMISCHE KOPPLUNGSEINRICHTUNG**
HYDRODYNAMIC COUPLING DEVICE
SYSTEME D'ACCOUPLEMENT HYDRODYNAMIQUE

(30) Priorität: 13.10.2000 DE 10050729
(43) Veröffentlichungstag der Anmeldung: 09.07.2003
(73) Patentinhaber: ZF Sachs AG, 97424 Schweinfurt (DE)
(72) Erfinder: SASSE, Christoph, 97422 Schweinfurt (DE)
(86) Internationale Anmeldenummer: PCT/EP2001/008777
(87) Internationale Veröffentlichungsnummer: WO 2002/031382

(56) Entgegenhaltungen:
- WO-A-00/03158
- DE-C- 19 834 062
- US-A- 5 441 135
- US-A- 5 533 602

## Beschreibung

### [Technisches Gebiet]

Die vorliegende Erfindung betrifft eine hydrodynamische Kopplungseinrichtung, insbesondere Drehmomentwandler oder Fluidkupplung, umfassend eine Gehäuseanordnung, ein in der Gehäuseanordnung vorgesehenes Turbinenrad, eine Überbrückungskupplungsanordnung, durch welche wahlweise eine Drehmomentübertragungsverbindung zwischen dem Turbinenrad und der Gehäuseanordnung herstellbar ist, wobei die Überbrückungskupplungsanordnung umfasst: wenigstens ein mit dem Turbinenrad zur gemeinsamen Drehung um eine Drehachse verbundenes, im Wesentlichen ringartiges Reibelement und ein Anpresselement, welches mit der Gehäuseanordnung zur gemeinsamen Drehung um die Drehachse verbunden ist und durch welches zur Herstellung der Drehmomentübertragungsverbindung zwischen Turbinenrad und Gehäuseanordnung das wenigstens eine Reibelement beaufschlagbar ist.

### [Stand der Technik]

Bei derartigen hydrodynamischen Kopplungseinrichtungen, die als hinlänglich bekannt zu gelten haben, können insbesondere in einem Zustand, in welchem wenigstens ein Teil des über einen Abtriebsstrang zu übertragenden Drehmomentes über die Überbrückungskupplungsanordnung von der Gehäuseanordnung auf das Turbinenrad geleitet wird, im Antriebssystem auftretende Drehschwingungen dadurch abgefangen werden, dass in der Überbrückungskupplungsanordnung ein bestimmter Schlupf zugelassen wird, so dass Drehmomentspitzen zu einer Relativverdrehung zwischen der Gehäuseanordnung und dem Turbinenrad führen können. Dies führt zu einer vergleichsweise großen Belastung der im Bereich der Überbrückungskupplungsanordnung reibend aneinander angreifenden Bauteile oder Oberflächenbereiche, da die zumindest bei größeren Drehmomentschwankungen auftretende, durch Schlupf abgefangene Verlustleistung in Wärme umgewandelt wird.

Um der Anforderung nach immer größeren möglichen Verlustleistungen im Bereich der Überbrückungskupplungsanordnung gerecht werden zu können, sind Systeme bekannt, wie sie beispielsweise in der WO 00/03158 offenbart sind. Bei dem aus dieser Druckschrift bekannten hydrodynamischen Drehmomentwandler weist die Überbrückungskupplungsanordnung zwei mit dem Turbinenrad zur gemeinsamen Drehung gekoppelte Reibelemente auf, zwischen welchen ein mit der Gehäuseanordnung zur gemeinsamen Drehung gekoppeltes Zwischenreibelement positioniert ist. Durch den als Anpresselement wirkenden Kupplungskolben werden die einzelnen Reiboberflächenbereiche in gegenseitige Wechselwirkung gebracht. Durch das Vorsehen mehrerer radial gestaffelter, miteinander in Wechselwirkung bringbarer Reibflächenpaarungen kann ohne wesentlichen Bauraumbedarf die gesamt zur Verfügung gestellte Reiboberfläche deutlich vergrößert werden mit der Folge, dass auch die im Schlupfbetrieb auftretende Verlustleistung über eine größere Oberfläche verteilt und somit verbessert und schneller abgeführt werden kann.

### [Aufgabe der Erfindung]

Es ist die Aufgabe der vorliegenden Erfindung, eine gattungsgemäße hydrodynamische Kopplungseinrichtung derart weiterzubilden, dass sie hinsichtlich der im Betrieb auftretenden Anforderungen, insbesondere der im Schlupfbetrieb auftretenden Anforderungen, ein verbessertes Leistungsvermögen aufweist.

### [Darstellung der Erfindung]

Gemäß der vorliegenden Erfindung wird diese Aufgabe gelöst durch die Merkmale des Anspruchs 1.

Durch die erste erfindungsgemäße Maßnahme, nämlich das Bereitstellen eines bestimmten Verhältnisses zwischen dem Strömungsaußendurchmesser und dem Reibaußendurchmesser des wenigstens einen Reibelementes, wird eine deutlich günstigere Massenverteilung erlangt mit der Folge eines geringeren Massenträgheitsmomentes. Die zweite erfindungsgemäße Maßnahme führt zu einer Überbrückungskupplungsanordnung mit vergrößerten Reibflächenbereichen, so dass die anfallende Verlustleistung noch besser aufgenommen und auf umgebende Komponenten oder Baugruppen übertragen werden kann.

Vorzugsweise ist bei der erfindungsgemäßen hydrodynamischen Kopplungseinrichtung vorgesehen, dass in einem Bereich radial außerhalb der Überbrückungskupplungsanordnung die Gehäuseanordnung eine an die Außenumfangskontur der Überbrückungskupplungsanordnung und die Außenumfangskontur des Turbinenrades angepasste Formgebung aufweist. Diese Maßnahme hat zur Folge, dass die Gehäuseanordnung insbesondere in ihrem auch für die Überbrückungskupplungsanordnung bzw. für deren Wirkung bereitgestellten Bereich mit höherer Steifigkeit ausgebildet ist. Dies bedingt eine deutlich geringere Ausbauchung bzw. ein deutlich geringeres Aufblähen des Wandlergehäuses unter dem im Wandlergehäuseinneren vorherrschenden Fluiddruck mit der Folge, dass selbst relativ breite - gemessen in radialer Richtung - Reibflächenbereiche nicht zu einer durch Ausbauchung induzierten Kantenbelastung von Reibbelägen o. dgl. führen können. Beispielsweise kann hierfür vorgesehen sein, dass in einem ersten Gehäuseabschnitt die Gehäuseanordnung die Überbrückungskupplungsanordnung im Wesentlichen zylindrisch umgebend ausgebildet ist und in einem an den ersten Gehäuseabschnitt anschließenden zweiten Gehäuseabschnitt eine in Richtung der Drehachse bogenartig gekrümmte, sich entlang des Außenumfangsbereichs des Turbinenrades erstreckende Formgebung aufweist.

Gemäß einem weiteren vorteilhaften Aspekt der vorliegenden Erfindung kann vorgesehen sein, dass das wenigstens eine Reibelement über ein Mitnahmeelement im Wesentlichen drehstarr mit dem Turbinenrad verbunden ist. Es entfällt somit die Notwendigkeit, das wenigstens eine Reibelement über einen Torsionsschwingungsdämpfer o. dgl. mit dem Turbinenrad zu koppeln, mit der Folge, dass der Bauraum effektiver genutzt werden kann und insbesondere die vorangehend angesprochene Formgebung der Gehäuseanordnung in einfacher Weise bereitgestellt werden kann.

Die effiziente Bauraumausnutzung kann bei der erfindungsgemäßen hydrodynamischen Kopplungsanordnung weiter dadurch unterstützt werden, dass das Anpresselement über eine im Wesentlichen im axialen Bereich zwischen diesem und dem Turbinenrad angeordnete Mitnahmeanordnung mit der Gehäuseanordnung zur gemeinsamen Drehung verbunden ist.

Wie bereits ausgeführt, ist es zum Vergrößern des effektiven Reiboberflächenbereichs vorteilhaft, wenn eine Mehrzahl von Reibelementen vorgesehen ist, wobei zwischen jeweils zwei Reibelementen ein mit der Gehäuseanordnung zur gemeinsamen Drehung verbundenes Zwischenreibelement angeordnet ist.

Zur weiteren Optimierung des bei der erfindungsgemäßen hydrodynamischen Kopplungsanordnung vorhandenen Massenträgheitsmomentes kann ein im Wesentlichen ringartig ausgebildetes erstes Ankoppelelement vorgesehen sein, das in seinem radial inneren Bereich an eine Außenseite der Gehäuseanordnung, vorzugsweise durch Laserschweißen, angebunden ist und in seinem radial äußeren Bereich zur Kopplung mit einem mit einer Antriebswelle fest verbundenen oder verbindbaren zweiten Ankoppelelement ausgebildet ist.

Ein besonders einfach zu realisierender Aufbau einer hydrodynamischen Kopplungsanordnung, welche nach dem Prinzip eines 2-Leitungssystems arbeitet, kann dadurch erhalten werden, dass durch das Anpresselement ein Innenraum der Gehäuseanordnung in einen ersten Raumbereich, in welchem das Turbinenrad angeordnet ist, und einen zweiten Raumbereich unterteilt ist und dass zum Austausch von in dem Innenraum vorgesehenem Arbeitsfluid in den ersten Raumbereich Arbeitsfluid einleitbar und aus dem zweiten Raumbereich Arbeitsfluid ausleitbar ist oder umgekehrt. Um bei einem derartigen System auch im überbrückten Zustand einen Fluidaustausch zu ermöglichen, wird vorgeschlagen, dass in dem Anpresselement wenigstens eine Fluiddurchtrittsöffnung zum Ermöglichen eines Fluidaustausches zwischen dem ersten Raumbereich und dem zweiten Raumbereich vorgesehen ist. Ferner wird zum Ermöglichen einer Fluidkühlung im schlupfenden Zustand weiter vorgeschlagen, dass in einem Reiboberflächenbereich des wenigstens einen Reibelementes eine, vorzugsweise mit bogenartiger Formgebung ausgebildet, Strömungskanalanordnung vorgesehen ist. Diese Strömungskanalanordnung ist dann vorzugsweise zu den beiden Raumbereichen hin offen, so dass bedingt durch die im Überbrückungszustand ohnehin vorhandene Druckdifferenz zwischen den beiden Raumbereichen ein Fluiddurchtritt durch die Strömungskanalanordnung hindurch stattfinden wird und dabei die in diesem räumlichen Bereich entstehende Wärmeenergie abgeführt werden kann.

Die vorliegende Erfindung wird nachfolgend mit Bezug auf die beiliegenden Figuren beschrieben. Es zeigt:
- Fig. 1: eine Teil-Längsschnittansicht einer erfindungsgemäßen hydrodynamischen Kopplungseinrichtung;
- Fig. 2: eine abgewandelte Ausgestaltungsform der in Fig. 1 dargestellten hydrodynamischen Kopplungsanordnung.

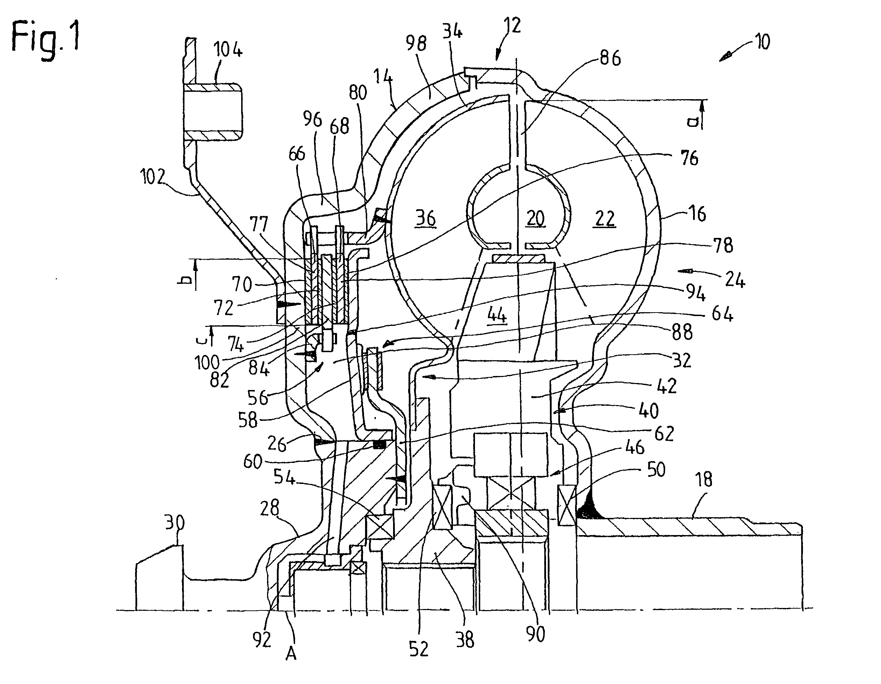

Der in Fig. 1 dargestellte hydrodynamische Drehmomentwandler 10 umfasst eine allgemein mit 12 bezeichnete Gehäuseanordnung. Diese wiederum umfasst im Wesentlichen einen Gehäusedeckel 14, der in seinem radial äußeren Bereich beispielsweise durch Verschweißung mit einer Pumpenradschale 16 fest verbunden ist. Radial innen ist die Pumpenradschale 16 mit einer Pumpenradnabe 18 fest verbunden. An ihrer zum Innenraum 20 hingewandten Innenseite trägt die Pumpenradschale 16 eine Mehrzahl von in Umfangsrichtung aufeinander folgenden Pumpenradschaufeln 22. Die Pumpenradschale 16 bildet zusammen mit der Pumpenradnabe 18 und den Pumpenradschaufeln 22 im Wesentlichen ein Pumpenrad 24. Der Gehäusedeckel 14 weist in seinem radial inneren Bereich eine zentrale Öffnung 26 auf, in welche eine Gehäusenabe 28 eingesetzt ist. Die Gehäusenabe 28 trägt in ihrem der Drehachse A naheliegenden Bereich einen Zentrierzapfen 30, welcher in eine entsprechende Zentrierausnehmung einer nicht dargestellten Antriebswelle, beispielsweise Kurbelwelle, zur Ausrichtung der Drehachse A des Drehmomentwandlers 10 bezüglich der Drehachse der Antriebswelle eingesetzt wird. Im Innenraum 20 des Drehmomentwandlers 10 ist ferner ein allgemein mit 32 bezeichnetes Turbinenrad angeordnet. Dieses Turbinenrad 32 umfasst im radial äußeren Bereich eine Turbinenradschale 34, welche an ihrer dem Pumpenrad 24 zugewandten Seite eine Mehrzahl von Turbinenradschaufeln 36 trägt. Radial innen ist die Turbinenradschale 34 beispielsweise durch Verschweißung mit einer Turbinenradnabe 38 fest verbunden. Die Turbinenradnabe 38 wiederum kann mit einer Abtriebswelle, beispielsweise einer Getriebeeingangswelle, drehfest verbunden werden.

Axial zwischen dem Pumpenrad 24 und dem Turbinenrad 32 ist ein Leitrad 40 vorgesehen. Das Leitrad 40 umfasst auf einem Leitradring 42 eine Mehrzahl von Leitradschaufeln 44, die zwischen den radial inneren Endbereichen der Pumpenradschaufeln 22 und der Turbinenradschaufeln 36 positioniert sind. Der Leitradring 42 ist über eine allgemein mit 46 bezeichnete Freilaufanordnung auf einem nicht dargestellten Stützelement, beispielsweise Stützhohlwetle, in einer Richtung um die Drehachse A herum drehbar, gegen Drehung in der anderen Richtung blockiert getragen. In axialer Richtung ist das Leitrad 40 über zwei Lageranordnungen 50, 52 bezüglich des Pumpenrads 24 einerseits und bezüglich des Turbinenrads 32 andererseits axial abgestützt. Das Turbinenrad 32 wiederum ist über ein Lager 54 axial an der Gehäusenabe 28 abgestützt.

Zur Herstellung einer direkten mechanischen Drehmomentübertragungsverbindung zwischen dem Turbinenrad 32 und der Gehäuseanordnung 12 ist eine allgemein mit 56 bezeichnete Überbrückungskupplungsanordnung vorgesehen. Diese umfasst einen Kupplungskolben 58, der mit einem radial inneren zylindrischen Abschnitt auf einer Außenumfangsfläche der Gehäusenabe 28 unter Zwischenanordnung eines Dichtungselementes 60 axial verschiebbar gehalten ist. An einer dem Turbinenrad 32 zugewandt liegenden Stirnfläche der Gehäusenabe 28 ist ein ring- oder sternförmig ausgebildetes Mitnahmeelement 62 beispielsweise durch Laserschweißen festgelegt. Dieses trägt in seinem radial äußeren Bereich eine elastische Anordnung, beispielsweise ein oder mehrere Blattfederelemente 64, über welche dann der Kolben 58 bezüglich des Mitnahmeelementes 62 axial bewegbar, jedoch in Umfangsrichtung um die Drehachse A nicht drehbar gehalten ist.

Die Überbrückungskupplungsanordnung 56 umfasst ferner zwei Lamellenoder Reibelemente 66, 68, welche an ihren jeweiligen axialen Stirnflächen Reibbeläge 70, 72, 74, 76 tragen. In ihrem radial äußeren Bereich weisen jeweilige Trägerelemente 77, 78 der Reibelemente 66, 68 eine Verzahnungsanordnung auf, die mit einer entsprechenden Verzahnungsanordnung eines ringartig ausgebildeten Mitnahmeelementes 80 in Mitnahmeeingriff steht. Dieses Mitnahmeelement 80 ist an einem Oberflächenbereich der Turbinenradschale 34 beispielsweise wiederum durch Laserverschweißung festgelegt. Es ist somit eine drehstarre Verbindung zwischen den Reibelementen 66, 68 und dem Turbinenrad 32 geschaffen.

Axial zwischen den beiden Reibelementen 66, 68 liegt ein Zwischenreibelement 82, das in seinem radial inneren Bereich eine Verzahnungskonfiguration aufweist, die mit einer entsprechenden Verzahnungskonfiguration eines an dem Gehäusedeckel 14 festgelegten Mitnahmeelementes 84 in Eingriff steht.

Zur Herstellung des Überbrückungszustandes wird der Fluiddruck in einem Raumbereich 86 in der Gehäuseanordnung 12, in welchem Raumbereich 86 auch das Turbinenrad 32 angeordnet ist, erhöht bezüglich des Fluiddrucks, welcher in einem Raumbereich 88 vorherrscht. Dieser Raumbereich 88 liegt im Wesentlichen zwischen dem Kolben 58 und dem Gehäusedeckel 14, d.h., der Innenraum 20 der Gehäuseanordnung 12 ist durch den Kolben 58 im Wesentlichen in diese beiden Raumbereiche 86 und 88 unterteilt. Zur Erhöhung des Fluiddrucks im Raumbereich 86 kann über eine Durchtritts-öffnungsanordnung 90 im Bereich des Leitrads 40 von der nicht dargestellten Fluidpumpe über einen beispielsweise zwischen der nicht dargestellten Abtriebswelle und der Stützhohlwelle gebildeten Zwischenraum Fluid eingeleitet werden. Im nicht überbrückten Zustand kann das Fluid dann vom Raumbereich 86 unter Umströmung der Reibelemente 66, 68 in den Raumbereich 88 eintreten und über in der Gehäusenabe 28 vorgesehenen, nach radial innen sich erstreckende Durchtrittsöffnungen 92 zu einer zentralen Durchtrittsöffnung in der Abtriebswelle und von dort zu einem Fluidreservoir strömen. Um im überbrückten Zustand, in welchem also der Kupplungskolben 58 gegen das Reibelement 68 presst, grundsätzlich im radial äußeren Bereich der Raumbereich 88 bezüglich des Raumbereichs 86 durch die aneinander reibend anliegenden Oberflächenbereiche fluiddicht abgeschlossen ist, auch einen Fluidaustausch zu ermöglichen, ist in dem Kupplungskolben 58 wenigstens eine Durchtrittsöffnung 94 vorgesehen, welche radial innerhalb eines ringartigen Oberflächenbereichs desselben liegt, welcher mit dem Reibbelag 76 des Reibelements 68 reibend zusammenwirkt. Ferner können die Reibbeläge 70, 72, 74, 76 Belagsnutungen beispielsweise bogenartiger Kontur aufweisen, die im radial äußeren Bereich zum Raumbereich 86 hin offen sind und im radial inneren Bereich zum Raumbereich 88 hin offen sind, so dass auch im überbrückten Zustand, insbesondere im schlupfenden Zustand, durch Fluiddurchströmung im Bereich der Reibbeläge 70, 72, 74, 76 die entstehende Reibwärme abgeführt werden kann.

Wie bereits eingangs ausgeführt, ist es beispielsweise zur Erzielung einer Drehschwingungsdämpfung vorteilhaft, die Überbrückungskupplungsanordnung 56 in einem schlupfenden Zustand zu betreiben, so dass zumindest bei Auftreten von Drehmomentspitzen eine Relativdrehung zwischen der Gehäuseanordnung 12 und dem Turbinenrad 32 möglich ist. Durch das Bereitstellen einer Mehrzahl von reibend aneinander angreifenden Reiboberflächenpaarungen wird die gesamt zur Verfügung gestellte Reibfläche vergrößert mit der Folge, dass die auftretende Belastung über einen größeren Oberflächenbereich verteilt wird und somit auch eine verbesserte Wärmeabfuhr erzeugt werden kann. Um dabei auch eine Optimierung bzw. Minimierung des Gesamtmassenträgheitsmomentes zu erzielen, ist der Reibaußendurchmesser b der Reibbeläge 70, 72, 74, 76 vergleichsweise klein gehalten. So weist im bevorzugten Falle ein Verhältnis des Fluidströmungsaußendurchmessers a, welcher näherungsweise dem Außendurchmesser des Turbinenrades 32 entspricht, bezüglich des Reibaußendurchmessers b einen Wert im Bereich von 1,35 bis 1,70 auf. Dies bedeutet also, dass der Strömungsaußendurchmesser a deutlich größer ist als der Reibaußendurchmesser b.

Des Weiteren liegt vorteilhafterweise der Wert des Verhältnisses zwischen dem Reibaußendurchmesser b und dem Reibinnendurchmesser c der Reibbeläge 70, 72, 74, 76 im Bereich von 1,15 bis 1,20. Dies führt zu einer vergleichsweise großen Radialerstreckung der ringartig ausgebildeten Reibbeläge. Um dies ohne Probleme im Betrieb realisieren zu können, ist ferner das Gehäuse 12 des hydrodynamischen Drehmomentwandlers 10 derart ausgebildet, dass unmittelbar anschließend an den radial äußeren Bereich der Überbrückungskupplungsanordnung 56, d.h. den radial äußeren Bereich der Reibelemente 66, 68, in einem ersten Gehäuseabschnitt 96 der Gehäusedeckel 14 sich näherungsweise zylindrisch oder axial erstreckt und somit nahe an der Außenumfangskontur der Überbrückungskupplungsanordnung 56 verläuft, was bedeutet, dass unmittelbar angrenzend an die Überbrückungskupplungsanordnung 56 im radial äußeren Bereich durch die abgeknickte Kontur des Gehäusedeckels 14 eine Versteifung der Gehäuseanordnung 12 dort geschaffen ist. In dem dem Turbinenrad 32 bzw. der Turbinenradschale 34 naheliegenden Bereich ist der Gehäusedeckel 14 dann in einem zweiten Gehäuseabschnitt 98, welcher an den ersten Gehäuseabschnitt 96 angrenzt bzw. in diesen übergeht, in axialer Richtung bogenartig abgekrümmt und somit in Anpassung an die Außenkontur des Turbinenrads 32 geformt. Dies führt zu einer weiteren Versteifung der Gehäuseanordnung 12 mit der Folge, dass durch das im Innenraum 20 unter Druck vorgesehene Arbeitsfluid ein Ausbauchen oder Aufblähen des Gehäuses 12 mit der Folge einer Kantenbelastung im Bereich des Reibbelages 70, in welchem dieser an einem sich im Wesentlichen radial erstreckenden Abschnitt 100 der Gehäuseanordnung 12 anliegt, vermieden werden kann.

Diese Struktur des erfindungsgemäßen Drehmomentwandlers 10 wird im Wesentlichen dadurch ermöglicht, dass die Reibelemente 66, 68 ohne Vorsehen eines Torsionsschwingungsdämpfers im radial äußeren Bereich derselben an die Turbinenradschale 34 angebunden sind.

Es sei darauf hingewiesen, dass bei dem erfindungsgemäßen Drehmomentwandler 10 selbstverständlich auch mehr als zwei Reibelemente 66, 68, beispielsweise drei Reibelemente, und dann eine entsprechend größere Anzahl an Zwischenreibelementen 82 zum Einsatz kommen können. Auch ist das Grundkonzept verwendbar bei nur einem Reibelement. Durch die Kombination der dennoch vergrößerten Gesamtreibfläche mit einem Drehmomentwandlerprinzip des 2-Leitungssystems, bei welchem das Arbeitsfluid in den Raumbereich 86 eingeleitet und über den Raumbereich 88 wieder ausgeleitet wird, wird ein sehr funktionsfähiger Hochleistungswandler erhalten, bei welchem insbesondere durch den Schlupfbetrieb der Überbrückungskupplungsanordnung 56 Drehmomentschwankungen abgefangen werden können.

Ein weiterer Vorteil des erfindungsgemäßen Drehmomentwandlers 10 liegt in der Art und Weise der Anbindung desselben an eine Antriebswelle. Man erkennt in Fig. 1 ein ringartig ausgebildetes Ankoppelelement 102, welches beispielsweise in axialer Richtung abgekröpft ausgebildet ist und beispielsweise aus Blech geformt ist. In seinem radial inneren Bereich ist dieses Ankoppelelement 102 vorzugsweise durch Laserschweißen an dem Gehäusedeckel 14 angebracht. Die Laserschweißung ist hier vorteilhaft, da sie in dem Bereich erfolgt, in welchem der Gehäusedeckel 14 an seiner Innenoberfläche eine Reibfläche bereitstellt und somit jedwede Verformung bei Durchführung eines Schweißvorgangs nachteilhaft wäre. In seinem radial äußeren Bereich trägt das Ankoppelelement mehrere Mutternelemente 104 o. dgl.. In diese Mutternelemente 104 können dann das Ankoppelelement 102 mit einer Flexplatte o. dgl. verbindende Schraubbolzen o. dgl. eingeschraubt werden. Diese Flexplatte kann dann in an sich bekannter Art und Weise in ihrem radial inneren Bereich an einen Kurbelwellenflansch o. dgl. angeschraubt sein. Es wird damit im radial äußeren Bereich des Drehmomentwandlers 10 Gewicht eingespart und somit das Massenträgheitsmoment weiter gesenkt.

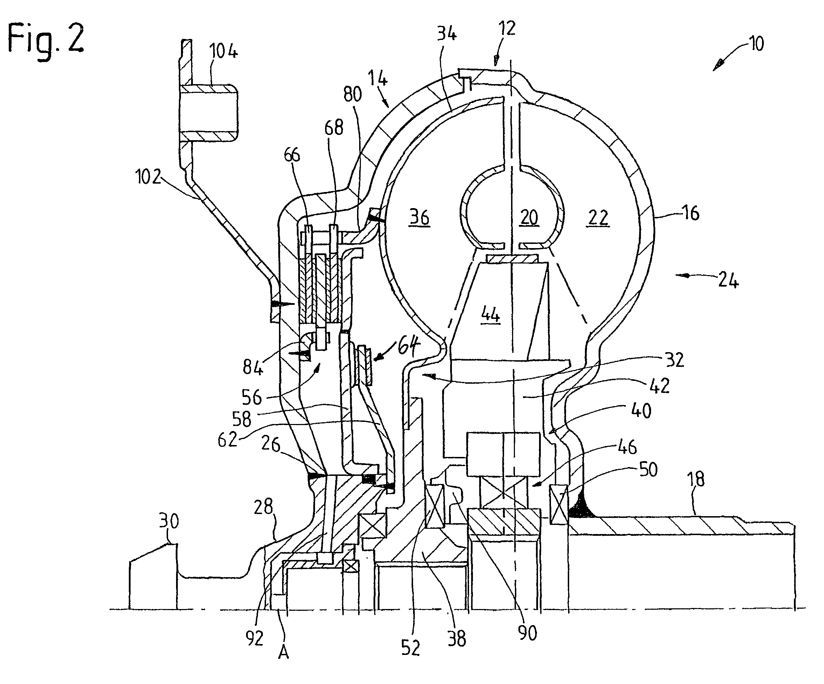

Zur weiteren Verminderung des Massenträgheitsmomentes kann eine Ausgestaltung beitragen, wie sie in Fig. 2 gezeigt ist. Diese entspricht im Wesentlichen grundsätzlich der Ausgestaltungsform gemäß Fig. 1, man erkennt jedoch, dass die radiale Erstreckung der Gehäusenabe 28 deutlich vermindert ist. Da die Gehäusenabe 28 als massives Metallteil ausgebildet ist, wird somit eine erhebliche Gewichteinsparung und eine entsprechende Minderung des Massenträgheitsmomentes erzielt. Man erkennt, dass bei der Ausgestaltungsform gemäß Fig. 1 näherungsweise die Hälfte der Radialerstreckung zwischen dem Reibaußendurchmesser und der Drehachse A durch die Gehäusenabe 28 eingenommen ist, während in der Ausgestaltungsform gemäß Fig. 2 dieser Wert im Bereich von einem Drittel liegt. Ansonsten entspricht die Ausgestaltungsform gemäß Fig. 2 der vorangehend mit Bezug auf die Fig. 1 beschriebene Ausgestaltungsform, so dass auf die vorangehenden Ausführungen verwiesen werden kann.

Es sei darauf hingewiesen, dass selbstverständlich bei dem erfindungsgemäßen Drehmomentwandler in verschiedenen Bereichen Veränderungen vorgenommen werden können, ohne von den Prinzipien der vorliegenden Erfindung abzuweichen. So könnten beispielsweise das oder die Zwischenreibelemente auch direkt mit dem Kolben 58 drehfest gekoppelt sein. Auch könnten die Trägerelemente 77, 78 der Reibelemente 66, 68 in ihrem radial äußeren Bereich auf das Schwungrad zu abgekröpft sein, um die axiale Erstreckung des Mitnahmeelementes 80 in Richtung vom Turbinenrad 32 weg verringern zu können. Auch könnten die beiden Trägerelemente 77, 78 in ihrem radial äußeren Bereich aufeinander zu abgekröpft sein, so dass die Verzahnungsanordnung des Mitnahmeelementes 80 in ihrer axialen Erstreckungslänge verkürzt werden kann. Sollte aus schwingungstechnischen oder Betriebsgründen bei verschiedenen Antriebssystemen das Bereitstellen eines Torsionsschwingungsdämpfers erforderlich sein, so könnte dieser im Bereich radial innerhalb der Überbrückungskupplungsanordnung im Wesentlichen axial zwischen dem Kupplungskolben 58 und der Turbinenradschale 34 vorgesehen sein, wo ausreichend Bauraum zur Verfügung steht.

## Patentansprüche

1. Hydrodynamische Kopplungseinrichtung, insbesondere Drehmomentwandler oder Fluidkupplung, umfassend:
- eine Gehäuseanordnung (12),
- ein in der Gehäuseanordnung (12) vorgesehenes Turbinenrad (32),
- eine Überbrückungskupplungsanordnung (56), durch welche wahlweise eine Drehmomentübertragungsverbindung zwischen dem Turbinenrad (32) und der Gehäuseanordnung (12) herstellbar ist,
wobei die Überbrückungskupplungsanordnung (56) umfasst:
- wenigstens ein mit dem Turbinenrad (32) zur gemeinsamen Drehung um eine Drehachse (A) verbundenes, im Wesentlichen ringartiges Reibelement (66, 68),
- ein Anpresselement (58), welches mit der Gehäuseanordnung (12) zur gemeinsamen Drehung um die Drehachse (A) verbunden ist und durch welches zur Herstellung der Drehmomentübertragungsverbindung zwischen Turbinenrad (32) und Gehäuseanordnung (12) das wenigstens eine Reibelement (66, 68) beaufschlagbar ist,
**dadurch gekennzeichnet,**
**dass** das Verhältnis eines Strömungsaußendurchmessers (a) im Bereich des Turbinenrades (32) zu einem Reibaußendurchmesser (b) des wenigstens einen Reibelementes (66, 68) im Bereich von 1,30 bis 1,80, vorzugsweise 1,35 bis 1,70, liegt oder/und
**dass** das Verhältnis eines Reibaußendurchmessers (b) des wenigstens einen Reibelementes (66, 68) zu einem Reibinnendurchmesser (c) des wenigstens einen Reibelementes (66, 68) im Bereich von 1,10 bis 1 ,25, vorzugsweise 1,15 bis 1,20, liegt.

2. Hydrodynamische Kopplungsanordnung nach Anspruch 1,
**dadurch gekennzeichnet, dass** in einem Bereich radial außerhalb der Überbrückungskupplungsanordnung (56) die Gehäuseanordnung (12) eine an die Außenumfangskontur der Überbrückungskupplungsanordnung (56) und die Außenumfangskontur des Turbinenrades (32) angepasste Formgebung aufweist.

3. Hydrodynamische Kopplungsanordnung nach Anspruch 2,
**dadurch gekennzeichnet, dass** in einem ersten Gehäuseabschnitt (96) die Gehäuseanordnung (12) die Überbrückungskupplungsanordnung (56) im Wesentlichen zylindrisch umgebend ausgebildet ist und in einem an den ersten Gehäuseabschnitt (96) anschließenden zweiten Gehäuseabschnitt (98) eine in Richtung der Drehachse (A) bogenartig gekrümmte, sich entlang des Außenumfangsbereichs des Turbinenrades (32) erstreckende Formgebung aufweist.

4. Hydrodynamische Kopplungsanordnung nach einem der Ansprüche 1 bis 3,
**dadurch gekennzeichnet, dass** das wenigstens eine Reibelement (66, 68) über ein Mitnahmeelement (80) im Wesentlichen drehstarr mit dem Turbinenrad (32) verbunden ist.

5. Hydrodynamische Kopplungsanordnung nach einem der Ansprüche 1 bis 4,
**dadurch gekennzeichnet, dass** das Anpresselement (58) über eine im Wesentlichen im axialen Bereich zwischen diesem und dem Turbinenrad (32) angeordnete Mitnahmeanordnung (62, 64) mit der Gehäuseanordnung (12) zur gemeinsamen Drehung verbunden ist.

6. Hydrodynamische Kopplungsanordnung nach einem der Ansprüche 1 bis 5,
**dadurch gekennzeichnet, dass** eine Mehrzahl von Reibelementen (66, 68) vorgesehen ist, wobei zwischen jeweils zwei Reibelementen (66, 68) ein mit der Gehäuseanordnung (12) zur gemeinsamen Drehung verbundenes Zwischenreibelement (82) angeordnet ist.

7. Hydrodynamische Kopplungsanordnung nach einem der Ansprüche 1 bis 6,
**gekennzeichnet durch** ein im Wesentlichen ringartig ausgebildetes erstes Ankoppelelement (102), das in seinem radial inneren Bereich an eine Außenseite der Gehäuseanordnung (12) , vorzugsweise **durch** Laserschweißen, angebunden ist und in seinem radial äußeren Bereich zur Kopplung mit einem mit einer Antriebswelle fest verbundenen oder verbindbaren zweiten Ankoppelelement ausgebildet ist.

8. Hydrodynamische Kopplungsanordnung nach einem der Ansprüche 1 bis 7,
**dadurch gekennzeichnet, dass** durch das Anpresselement (58) ein Innenraum (20) der Gehäuseanordnung (12) in einen ersten Raumbereich (86), in welchem das Turbinenrad (32) angeordnet ist, und einen zweiten Raumbereich (88) unterteilt ist und dass zum Austausch von in dem Innenraum (20) vorgesehenem Arbeitsfluid in den ersten Raumbereich (86) Arbeitsfluid einleitbar und aus dem zweiten Raumbereich (88) Arbeitsfluid ausleitbar ist oder umgekehrt.

9. Hydrodynamische Kopplungsanordnung nach Anspruch 8,
**dadurch gekennzeichnet, dass** in dem Anpresselement (58) wenigstens eine Fluiddurchtrittsöffnung (94) zum Ermöglichen eines Fluidaustausches zwischen dem ersten Raumbereich (86) und dem zweiten Raumbereich (88) vorgesehen ist.

10. Hydrodynamische Kopplungsanordnung nach Anspruch 8 oder 9,
**dadurch gekennzeichnet, dass** in einem Reiboberflächenbereich des wenigstens einen Reibelementes (66, 68) eine, vorzugsweise mit bogenartiger Formgebung ausgebildet, Strömungskanalanordnung vorgesehen ist.

## Claims

1. Hydrodynamic coupling device, in particular torque converter or fluid clutch, comprising:
- a housing arrangement (12),
- a turbine wheel (32) provided in the housing arrangement (12),
- a lock-up clutch arrangement (56) enabling the optional production of a torque transmission connection between the turbine wheel (32) and the housing arrangement (12),
the lock-up clutch arrangement (56) comprising:
- at least one substantially annular friction element (66, 68) which is connected to the turbine wheel (32) for rotation together about an axis of rotation (A),
- a pressure element (58) which is connected to the housing arrangement (12) for rotation together about the axis of rotation (A) and can be used to act upon the at least one friction element (66, 68) to produce the torque transmission connection between the turbine wheel (32) and housing arrangement (12),
**characterized in that** the ratio of a flow outside diameter (a) in the region of the turbine wheel (32) to a friction outside diameter (b) of the at least one friction element (66, 68) is in the range of from 1.30 to 1.80, preferably 1.35 to 1.70, and/or
**in that** the ratio of a friction outside diameter (b) of the at least one friction element (66, 68) to a friction inside diameter (c) of the at least one friction element (66, 68) is in the range of from 1.10 to 1.25, preferably 1.15 to 1.20.

2. Hydrodynamic coupling arrangement according to Claim 1, **characterized in that**, in a region radially outside the lock-up clutch arrangement (56), the housing arrangement (12) has a shaping matched to the outer circumferential contour of the lock-up clutch arrangement (56) and the outer circumferential contour of the turbine wheel (32).

3. Hydrodynamic coupling arrangement according to Claim 2, **characterized in that**, in a first housing section (96), the housing arrangement (12) is configured so as to surround the lock-up clutch arrangement (56) substantially cylindrically and, in a second housing section (98) adjoining the first housing section (96), has a shaping which is arcuately curved in the direction of the axis of rotation (A) and extends along the outer circumferential region of the turbine wheel (32).

4. Hydrodynamic coupling arrangement according to one of Claims 1 to 3, **characterized in that** the at least one friction element (66, 68) is connected to the turbine wheel (32) substantially rigidly so as to rotate with it via a driving element (80).

5. Hydrodynamic coupling arrangement according to one of Claims 1 to 4, **characterized in that**, via a driving arrangement (62, 64) arranged substantially in the axial region between the pressure element (58) and the turbine wheel (32), the said pressure element (58) is connected to the housing arrangement (12) for rotation together.

6. Hydrodynamic coupling arrangement according to one of Claims 1 to 5, **characterized in that** a plurality of friction elements (66, 68) are provided, an intermediate friction element (82) which is connected to the housing arrangement (12) for rotation together being arranged between each pair of friction elements (66, 68).

7. Hydrodynamic coupling arrangement according to one of Claims 1 to 6, **characterized by** a first coupling element (102) which is of substantially annular design, is joined in its radially inner region to an outer side of the housing arrangement (12), preferably by laser welding, and is designed in its radially outer region for coupling to a second coupling element which is connected fixedly or can be connected fixedly to a drive shaft.

8. Hydrodynamic coupling arrangement according to one of Claims 1 to 7, **characterized in that** an interior space (20) of the housing arrangement (12) is divided by the pressure element (58) into a first spatial region (86), in which the turbine wheel (32) is arranged, and into a second spatial region (88), and **in that**, in order to replace working fluid provided in the interior space (20), working fluid can be introduced into the first spatial region (86) and working fluid can be removed from the second spatial region (88), or vice versa.

9. Hydrodynamic coupling arrangement according to Claim 8, **characterized in that** at least one fluid passage opening (94) is provided in the pressure element (58) to permit an exchange of fluid between the first spatial region (86) and the second spatial region (88).

10. Hydrodynamic coupling arrangement according to Claim 8 or 9, **characterized in that** a flow duct arrangement preferably designed with arcuate shaping is provided in a friction surface region of the at least one friction element (66, 68).

## Revendications

1. Système d'accouplement hydrodynamique, notamment convertisseur de couple ou « fluid drive », comprenant :
- un ensemble carter (12),
- une roue de turbine (32) prévue dans l'ensemble carter (12),
- un dispositif d'accouplement de prise (56) permettant de réaliser au choix une liaison de transmission de couple entre la roue de turbine (32) et l'ensemble carter (12),
le dispositif d'accouplement de prise (56) comportant:
- au moins un élément de friction (66, 68) de forme sensiblement annulaire, solidaire en rotation avec la roue de turbine (32) pour une rotation commune autour d'un axe de rotation (A),
- un élément de pression (58) solidaire en rotation avec l'ensemble carter (12) pour une rotation commune autour de l'axe de rotation (A) et permettant de mettre sous pression l'au moins un élément de friction (66, 68) afin de réaliser la liaison de transmission de couple entre la roue de turbine (32) et l'ensemble carter (12),
**caractérisé**
**en ce que** le rapport d'un diamètre d'écoulement extérieur (a), dans la zone de la roue de turbine (32), par rapport à un diamètre de friction extérieur (b) de l'au moins un élément de friction (66, 68) présente une valeur se situant dans une fourchette allant de 1,30 à 1,80, de préférence de 1,35 à 1,70 et/ou
**en ce que** le rapport entre un diamètre de friction extérieur (b) de l'au moins un élément de friction (66, 68) et le diamètre de friction intérieur (c) de l'au moins un élément de friction (66, 68) présente une valeur se situant dans une fourchette allant de 1,10 à 1,25, de préférence de 1,15 à 1,20.

2. Système d'accouplement hydrodynamique selon la revendication 1,
**caractérisé en ce que**, dans une zone située radialement à l'extérieur du dispositif d'accouplement de prise (56), l'ensemble carter (12) présente une forme ajustée au contour de la périphérie extérieure du dispositif d'accouplement de prise (56) et au contour de la périphérie extérieure de la roue de turbine (32).

3. Système d'accouplement hydrodynamique selon la revendication 2,
**caractérisé en ce que** l'ensemble carter (12) présente, dans une première partie de carter (96), une forme entourant de manière sensiblement cylindrique le dispositif d'accouplement de prise (56) et, dans une seconde partie de carter (98) adjacente à la première partie de carter (96), il présente une forme courbée en forme d'arc s'étendant le long de la zone périphérique extérieure de la roue de turbine (32) en direction de l'axe de rotation (A).

4. Système d'accouplement hydrodynamique selon l'une des revendications 1 à 3,
**caractérisé en ce que** l'au moins un élément de friction (66, 68) est relié pour l'essentiel de manière solidaire en rotation avec la roue de turbine (32) par l'intermédiaire d'un élément d'entraînement (80).

5. Système d'accouplement hydrodynamique selon l'une des revendications 1 à 4,
**caractérisé en ce que** l'élément de pression (58) est relié de manière solidaire en rotation avec l'ensemble carter (12) par l'intermédiaire d'un dispositif d'entraînement (62, 64) situé pour l'essentiel dans la zone axiale entre l'élément de pression (58) et la roue de turbine (32).

6. Système d'accouplement hydrodynamique selon l'une des revendications 1 à 5,
**caractérisé en ce qu'**une pluralité d'éléments de friction (66, 68) est prévue, un élément de friction intermédiaire (82) solidaire en rotation de l'ensemble carter (12) étant disposé chaque fois entre deux éléments de friction (66, 68).

7. Système d'accouplement hydrodynamique selon l'une des revendications 1 à 6,
**caractérisé par** un premier élément d'accouplement (102) de forme sensiblement annulaire fixé dans sa zone radiale intérieure sur un côté extérieur de l'ensemble carter (12), de préférence par soudage laser, et formé, dans sa zone radiale extérieure, de sorte à assurer l'accouplement avec un second élément d'accouplement solidaire ou pouvant être rendu solidaire d'un arbre moteur.

8. Système d'accouplement hydrodynamique selon l'une des revendications 1 à 7,
**caractérisé en ce que** l'élément de pression (58) divise un volume intérieur (20) de l'ensemble carter (12) en un premier volume (86) dans lequel est disposée la roue de turbine (32) et en un second volume (88), et **en ce que**, pour l'échange du fluide de travail prévu dans le volume intérieur (20), du fluide de travail peut être conduit dans le premier volume de travail (86) et du fluide de travail peut être conduit hors du second volume de travail (88), ou vice-versa.

9. Système d'accouplement hydrodynamique selon la revendication 8,
**caractérisé en ce qu'**au moins une ouverture de passage de fluide (94) est prévue dans l'élément de pression (58) afin de permettre un échange de fluide entre le premier volume (86) et le second volume (88).

10. Système d'accouplement hydrodynamique selon la revendication 8 ou 9,
**caractérisé en ce que**, dans une zone de surface de frottement de l'au moins un élément de friction (66, 68) un arrangement de canaux d'écoulement, réalisés de préférence en forme d'arc, est prévu.
